# EUROPÄISCHE PATENTANMELDUNG

(11) **EP 2 051 055 A2**
(43) Veröffentlichungstag der Anmeldung: **22.04.2009**
(21) Anmeldenummer: 08013642.7
(22) Anmeldetag: 30.07.2008
(51) Int. Cl.: G01L 5/28

(54) **Vorrichtung zur Untersuchung einer Bremsscheibe unter Salz-Nass-Kälte-Einflüssen**

(30) Priorität: 19.10.2007 DE 102007050067; 11.07.2008 DE 102008032760
(71) Anmelder: Audi AG, 85045 Ingolstadt (DE)
(72) Erfinder: Sommer, Simon, 55411 Bingen am Rhein (DE); Saame, Christoph, 85080 Gaimersheim (DE)
(74) Vertreter: Asch, Konrad

(57) **Zusammenfassung**

Die Erfindung betrifft eine Vorrichtung (10) zur Untersuchung einer Bremsscheibe (12) unter Salz-Nass-Kälte-Einflüssen. Die Vorrichtung zeichnet sich dadurch aus, dass die Prüfkabine (16) hineinreichende Antriebswelle (18) und die in die Prüfkabine (16) hineinreichende Messwelle (26) jeweils flüssigkeitsdicht in die Prüfkabine (16) geführt sind und dass die Zuluftleitung (34) derart angeordnet ist, dass die in die Prüfkabine (16) einströmende Zuluft einen innen am Sichtfenster entlang geführter Sperrluftstrom bildet.

## Beschreibung

Die Erfindung betrifft eine Vorrichtung zur Untersuchung einer Bremsscheibe unter Salz-Nass-Kälte-Einflüssen gemäß dem Patentanspruches 1.

Bekanntlich werden auf Bremsen-Schwungmassenprüfständen (SMP) Funktions-, Festigkeits- und Komfortuntersuchungen von Bremsenbauteilen durchgeführt. Die Ausführung der Prüfstände ist dabei sehr stark auf den jeweils abzudeckenden Erprobungsumfang zugeschnitten. Der hohe Automatisierungsgrad ermöglicht den vollautomatischen Ablauf dynamischer Prüfungen unter realitätsnahen Betriebsbedingungen mit hoher Reproduzierbarkeit. Ein derartiger Bremsenschwungmassenprüfstand ist beispielsweise in der DE 10 123 828 C1 offenbart.

Mit den bekannten Bremsen-Schwungmassenprüfständen (SMP) sind weiterführende Untersuchungen, insbesondere eine Untersuchung/Prüfung einer Bremsscheibe unter Salz-Nass-Kälte-Einflüssen (SNK) nicht durchführbar.

Der Erfindung liegt die Aufgabe zugrunde eine Vorrichtung zur Untersuchung einer Bremsscheibe zur Verfügung zu stellen, die eine Durchführung von Funktions-, Festigkeits- und Komfortuntersuchungen von Bremsenbauteilen unter einer eingeschränkten Umweltsimulation, insbesondere unter Salz-Nass-Kälte-Einflüssen (SNK), ermöglicht.

Diese Aufgabe wird durch Merkmale des Anspruches 1 gelöst.

Die Unteransprüche bilden vorteilhafte Weiterbildungen der Erfindung.

Die erfindungsgemäße Vorrichtung zur Untersuchung einer Bremsscheibe unter Salz-Nass-Kälte-Einflüssen (SNK) weist einen Bremsenprüfstand mit mindestens einer Prüfkabine, eine in die Prüfkabine hineinreichende Antriebswelle zum Antrieb der zur untersuchenden Bremsscheibe, einen in der Prüfkabine angeordneten Bremssattel zum Abbremsen der Bremsscheibe sowie eine wahlweise in oder außerhalb der Kabine angeordnete Temperaturmesseinrichtung auf. Weiterhin umfasst die Vorrichtung eine außerhalb der Prüfkabine angeordnete Momenten-Messeinrichtung, die über eine in die Prüfkabine hineinreichende Messwelle mit dem Bremssattel in Wirkverbindung steht, mindestens eine außerhalb der Prüfkabine vor einem Sichtfenster angeordnete Kamera sowie ein Kälteaggregat zur Kühlung des Prüflings, d. h. zur Kühlung der Bremsscheibe und des Bremssattels. Zudem weist die Vorrichtung mindestens eine Zuluft- und Abluftleitung zur Zu- und Abfuhr von Luft in die Prüfkabine, mindestens eine auf die Bremsscheibe ausgerichtete Zufuhrleitung zur Zuführung von Salzwasser auf die Bremsscheibe sowie eine Steuer-Regeleinheit zur Steuerregelung des Bremsenprüfstands auf. Die in in die Prüfkabine hineinreichende Antriebswelle und die in die Prüfkabine hineinreichende Messwelle sind jeweils flüssigkeitsdicht in die Prüfkabine geführt und die Zuluftleitung ist derart angeordnet, dass die in die Prüfkabine einströmende Zuluft einen innen am Sichtfenster entlang geführter Sperrluftstrom bildet.

Aufgrund der Kapselung der Prüfkabine, d. h. die feuchtigkeitsdichte und temperaturisolierende Ausbildung der Prüfkabine ist in vorteilhafterweise sichergestellt, dass lediglich der in der Prüfkabine befindlichen Prüfling/Bremsscheibe dem Salzwasser ausgesetzt ist. Hierdurch ist sichergestellt, dass die außerhalb der Prüfkabine befindlichen weiteren Prüfstandsbauteile mit dem korrosiven Medium Salzwasser nicht in Kontakt treten können. Hierdurch ist eine längere Lebensdauer dieser weiteren Prüfbestandteile gewährleistet.

Durch das weitere Merkmal, nämlich der Ausbildung eines Sperrluftstroms entlang der Sichtfenster ist in vorteilhafter Weise sichergestellt, dass die Sichtfenster von Verunreinigungen frei gehalten werden. Somit ist eine uneingeschränkte Beobachtung der Bremsscheibe während eines Prüfvorgangs gewährleistet.

Vorzugsweise ist die Antriebswelle und die Messwelle mittels einer Grob- und Feinschmutzdichtung flüssigkeitsdicht in die Prüfkabine geführt. Die Verwendung einer Grob- und Feinschmutzdichtung erweist sich hier als besonders vorteilhaft, da dies eine kostengünstige Möglichkeit zur Kapselung der Prüfkabine darstellt.

Gemäß einer Ausführungsform der Erfindung ist außerhalb der Prüfkabine der Antriebswelle eine Schwungmasse zugeordnet. In vorteilhafter Weise ist hierdurch eine realistische Testumgebung ermöglicht, da durch die Schwungmasse die Trägheit des Fahrzeugs simulierbar ist.

Gemäß einer weiteren Ausführungsform der Erfindung ist vorgesehen, dass mindestens eine der Kameras als eine Thermografiekamera ausgebildet ist. Die Verwendung einer zusätzlichen Thermografiekamera hat den Vorteil, dass neben der oben genannten optischen Überwachung der korrosive Verschleiß an der Bremsscheibe beobachtet und bewertet werden kann.

Um einen ausreichenden Vorrat an Salzwasser zur Verfügung zu stellen, steht die Zufuhrleitung zur Zuführung von Salzwasser mit einer Salzwasseraufbereitungsanlage in Wirkverbindung.

Gemäß einer besonders vorteilhaften Ausführungsform der Erfindung stehen die Salzwasseraufbereitungsanlage und das Kälteaggregat mit der Steuer- und Regeleinheit in Wirkverbindung und sind über diese steuer- und regelbar ausgebildet. Dies erweist sich als besonders vorteilhaft, da nunmehr auf Grund der automatischen Salzwasseraufbereitung und der automatischen Kältesteuerung ein vollautomatischer Prüfablauf ermöglicht ist.

Vorzugsweise weisen die Zu- und Abluftleitungen Klappen auf, die mit der Steuer- und Regeleinheit in Wirkverbindung stehen und über diese steuer- und regelbar sind. Die Ausbildung von Klappen in der Zu- und Abluftleitung sowie die Steuer/Regelung dieser über die Steuer- und Regeleinheit erweist sich als vorteilhaft, da nunmehr über diese Klappen auf eine einfache Art und Weise die gewünschte Betriebsart der Vorrichtung steuer- und regelbar ist.

Vorzugsweise sind die Prüfkammer, ein der Antriebswelle zugeordneter Antriebsmotor, die Momenten-Messeinrichtung sowie das Kälteaggregat auf einem gemeinsamen Grundrahmen montiert.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im folgenden anhand des in der Zeichnung dargestellten Ausführungsbeispiels näher beschrieben.

In der Beschreibung, in den Ansprüchen und in den Zeichnungen werden die in der unten aufgeführten Liste der Bezugszeichen verwendeten Begriffe und zugeordneten Bezugszeichen verwendet. In der Zeichnung bedeuten:

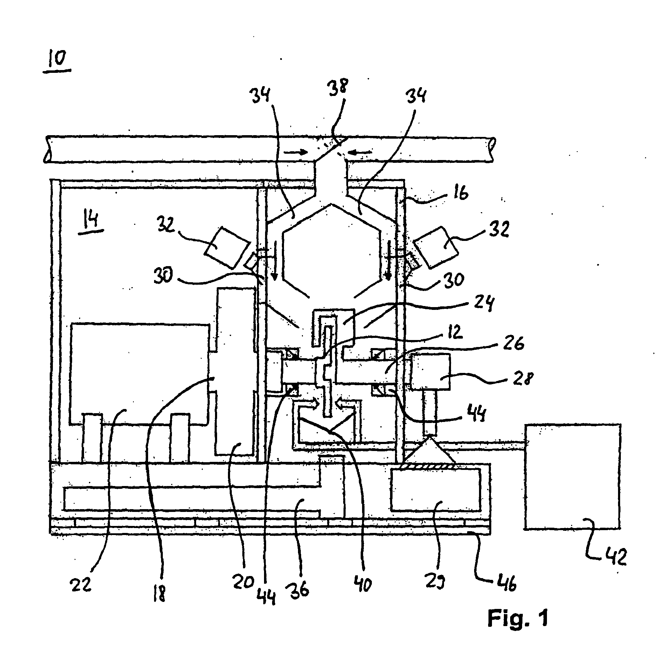

- Fig. 1: Eine schematische Darstellung der erfindungsgemäßen Vorrichtung zur Untersuchung einer Bremsscheibe unter Salz-Nass-Kälte-Einflüssen.

Wie Fig. 1 zeigt, umfasst die insgesamt mit der Bezugsziffer 10 bezeichnete Vorrichtung zur Untersuchung einer Bremsscheibe 12 unter Salz-Nass-Kälte-Einflüssen einen Bremsenprüfstand 14 mit mindestens einer Prüfkabine 16.

Die Bremsscheibe 12 ist an einer in die Prüfkabine 16 hineinreichende Antriebswelle 18 angeordnet. Außerhalb der Prüfkabine 16 steht die Antriebswelle 18 mit einer Schwungmasse 20 sowie einem Antriebsmotor 22 in Wirkverbindung.

In der Prüfkabine 16 ist weiterhin ein die Bremsscheibe 12 umfassender Bremssattel 24 angeordnet. Der Bremssattel 24 umfasst in bekannter Art und Weise hydraulisch betätigbare, an die Bremsscheibe 12 anpressbare Bremsbeläge.

Der Bremssattel 24 steht über eine in die Prüfkabine 16 hineinreichende Messwelle 26 mit einer außerhalb der Prüfkabine 16 angeordneten Momenten-Messeinrichtung 28 in Wirkverbindung.

Zudem ist in der Prüfkabine 16 eine, hier aus Gründen der Übersichtlichkeit nicht dargestellte Temperatur-Messeinrichtung angeordnet und die Prüfkabine 16 ist über ein Kälteaggregat 29 gezielt kühlbar.

Außerhalb der Prüfkabine 16 sind jeweils vor einem Sichtfenster 30 zwei Kameras 32 angeordnet, die derart ausgerichtet sind, dass eine Beobachtung der Bremsscheibe 12 ermöglicht ist. Mindestens eine der Kameras 32 ist vorliegend als eine Thermographie-Kamera ausgebildet.

Weiterhin umfasst die Vorrichtung 10 zwei Zuluftleitungen 34 und eine Abluftleitung 36 zur Zu- und Endlüftung der Prüfkabine 16. Die beiden Zuluftleitungen 34 sind dabei so ausgeführt, dass der Blick der beiden Kameras 32 auf die Bremsscheibe 12 ermöglicht ist. In die Zuluftleitungen 34 sind zudem Klappen 38 angeordnet, über die Zuluft- und Abluftführung 34, 36 entsprechend der gewünschten Betriebsart regelbar ist.

Zur gezielten Zuführung von Salzwasser auf die Bremsscheibe 12 sind zwei Zufuhrleitungen 40 auf die Bremsscheibe 12 ausgerichtet. Die Zufuhrleitungen 40 stehen ihrerseits mit einer Salzbereitungsanlage 42 in Wirkverbindung.

Um einen vollautomatischen Prüfablauf zu ermöglichen, stehen die Temperatur-Messeinrichtung, das Kälteaggregat 29 sowie die Salzwasseraufbereitungsanlage 42 mit einer, hier aus Gründen der Übersichtlichkeit nicht dargestellten, Steuer- und Regeleinheit in Wirkverbindung.

Die in die Prüfkabine 16 hineinreichende Antriebswelle 18 und die in die Prüfkabine 16 hineinreichende Messwelle 26 weisen jeweils eine Grob- und Feinschmutzdichtung 44 auf, so dass ein Austreten von Salzwasser aus der Prüfkabine 16 ausgeschlossen ist. D.h. ein Kontakt der außerhalb Prüfkabine 16 befindlichen Komponenten mit dem korrosiven Medium Salzwasser ist ausgeschlossen.

Wie Fig. 1 weiterhin zu entnehmen ist, sind die beiden Zuluftleitungen 34 so ausgebildet und angeordnet, dass die einströmende Zuluft an der Innenseite der Sichtfenster 30 vorbeigeführt wird. D. h. die an den Sichtfenstern 30 vorbeiströmende Luft bildet einen Sperrluftstrom, so dass ein Verschmutzen der Sichtfenster 30 erschwert wird und eine uneingeschränkte Beobachtung der Bremsscheibe 12 durch die beiden Kameras 32 gewährleistet ist.

Mit Ausnahme der Salzwasseraufbereitungsanlage 42 sind vorliegend sämtliche Komponenten der Vorrichtung 10 auf einem gemeinsamen Grundrahmen 46 montiert.

### Bezugszeichenliste

- 10: Vorrichtung
- 12: Bremsscheibe
- 14: Bremsprüfstand
- 16: Prüfkabine
- 18: Antriebswelle
- 20: Schwungmasse
- 22: Antriebsmotor
- 24: Bremssattel
- 26: Messwelle
- 28: Momenten-Messeinrichtung
- 29: Kälteaggregat
- 30: Sichtfenster
- 32: Kamera
- 34: Zuluftleitungen
- 36: Abluftleitung
- 38: Klappen
- 40: Zufuhrleitung Salzwasser
- 42: Salzwasseraufbereitungsanlage
- 44: Grob- und Feinschmutzdichtung
- 46: Grundrahmen

## Patentansprüche

1. Vorrichtung (10) zur Untersuchung einer Bremsscheibe (12) unter Salz-Nass-Kälte-Einflüssen, umfassend
- einen Bremsenprüfstand (14) mit mindestens einer Prüfkabine (16);
- eine in die Prüfkabine (16) hineinreichende Antriebswelle (18) zum Antrieb der zu untersuchenden Bremsscheibe (12);
- einen in oder außerhalb der Prüfkabine (16) angeordneten Bremssattel (24) zum Abbremsen der Bremsscheibe (12);
- eine Temperatur-Messeinrichtung;
- eine außerhalb der Prüfkabine (16) angeordnete Momenten-Messeinrichtung (28), die über eine in die Prüfkabine (16) hineinreichende Messwelle (26) mit dem Bremssattel (24) in Wirkverbindung steht;
- mindestens eine außerhalb der Prüfkabine (16) vor einem Sichtfenster (30) angeordnete Kamera (32);
- ein Kälteaggregat (29) zur Kühlung der Bremsscheibe 12 und des Bremssattels 24;
- mindestens eine Zuluft- und Abluftleitung (34, 36) zur Zu- und Abfuhr von Luft in die Prüfkabine (16);
- mindestens eine auf die Bremsscheibe (12) ausgerichtete Zufuhrleitung (40) zur Zuführung von Salzwasser auf die Bremsscheibe (12), sowie
- eine Steuer-/Regeleinheit zur steuer/regelung der Vorrichtung,
wobei die in die Prüfkabine (16) hineinreichende Antriebswelle (18) und die in die Prüfkabine (16) hineinreichende Messwelle (26) jeweils flüssigkeitsdicht in die Prüfkabine (16) geführt sind und die Zuluftleitung (34) derart angeordnet ist, dass die in die Prüfkabine (16) einströmende Zuluft einen innen am Sichtfenster entlang geführter Sperrluftstrom bildet.

2. Vorrichtung nach Anspruch 1, **dadurch gekennzeichnet, dass** die Antriebswelle (18) und die Messwelle (26) mittels einer Grob- und Feinschmutzdichtungen (44) flüssigkeitsdicht in die Prüfkabine (16) geführt sind.

3. Vorrichtung nach Anspruch 1 und 2, **dadurch gekennzeichnet, dass** außerhalb der Prüfkabine (16) der Antriebswelle (18) eine Schwungmasse (20) zugeordnet ist.

4. Vorrichtung nach Anspruch 1 bis 3, **dadurch gekennzeichnet, dass** die Kameras (32) als Thermographie-Kameras ausgebildet sind.

5. Vorrichtung nach einem der vorhergehenden Ansprüchen, **dadurch gekennzeichnet, dass** die Zufuhrleitung (34) zur Zuführung von Salzwasser mit einer Salzwasseraufbereitungsanlage (42) in Wirkverbindung steht.

6. Vorrichtung nach einem der vorhergehenden Ansprüchen, **dadurch gekennzeichnet,dass** die Salzwasseraufbereitungsanlage (42) und das Kälteaggregat (29) mit der Steuer- und Regeleinheit in Wirkverbindung stehen und darüber steuer-/regelbar sind.

7. Vorrichtung nach einem der vorhergehenden Ansprüchen, **dadurch gekennzeichnet, dass** die Zu- und /oder Abluftleitungen (34, 36) Klappen (38) aufweisen.

8. Vorrichtung nach Anspruch 7, **dadurch gekennzeichnet, dass** die Klappen (38) mit der Steuer- und Regeleinheit in Wirkverbindung stehen und darüber steuer-/regelbar sind.

9. Vorrichtung nach einem der vorhergehenden Ansprüchen, **dadurch gekennzeichnet, dass** die Prüfkabine (16), ein der Antriebswelle (18) zugeordneter Antriebsmotor (22), die Momenten-Messeinrichtung (28) sowie das Kälteaggregat (29) auf einem gemeinsamen Grundrahmen (46) montiert sind.
